# EUROPÄISCHE PATENTSCHRIFT

(11) **EP 0 953 103 B1**
(45) Veröffentlichungstag und Bekanntmachung des Hinweises auf die Patenterteilung: **18.02.2004**
(21) Anmeldenummer: 98958188.9
(22) Anmeldetag: 05.10.1998
(51) Int. Cl.: F02D 41/06, F02D 41/38

(54) **VERFAHREN ZUM STARTEN EINER BRENNKRAFTMASCHINE**
METHOD FOR STARTING AN INTERNAL COMBUSTION ENGINE
PROCEDE DE DEMARRAGE D'UN MOTEUR A COMBUSTION INTERNE

(30) Priorität: 18.10.1997 DE 19746119
(43) Veröffentlichungstag der Anmeldung: 03.11.1999
(73) Patentinhaber: ROBERT BOSCH GMBH, 70442 Stuttgart (DE)
(72) Erfinder: BOCHUM, Hansjoerg, D-70771 Leinfelden (DE); BUCHHOLZ, Dieter, D-74343 Sachsenheim (DE)
(86) Internationale Anmeldenummer: PCT/DE1998/002940
(87) Internationale Veröffentlichungsnummer: WO 1999/020882

(56) Entgegenhaltungen:
- EP-A- 0 547 649
- EP-A- 0 684 374
- DE-A- 19 612 150
- GB-A- 2 310 689
- GB-A- 2 317 028

## Beschreibung

### Stand der Technik

Die Erfindung betrifft ein Verfahren zum Starten einer Brennkraftmaschine insbesondere eines Kraftfahrzeugs, bei dem Kraftstoff entweder in einer ersten Betriebsart während einer Verdichtungsphase oder in einer zweiten Betriebsart während einer Ansaugphase direkt in einen von einem Kolben begrenzten Brennraum eingespritzt wird, bei dem der in den Brennraum eingespritzte Kraftstoff entzündet wird, und bei dem die Einspritzung des Kraftstoffs vor der Entzündung des Kraftstoffs beendet wird. Des weiteren betrifft die Erfindung eine Brennkraftmaschine insbesondere für ein Kraftfahrzeug, mit einem Einspritzventil, mit dem Kraftstoff entweder in einer ersten Betriebsart während einer Verdichtungsphase oder in einer zweiten Betriebsart während einer Ansaugphase direkt in einen von einem Kolben begrenzten Brennraum eingespritzt wird, mit einer Zündkerze, mit der der in den Brennraum eingespritzte Kraftstoff entzündet wird, und mit einem Steuergerät, mit dem das Einspritzventil und die Zündkerze zum Starten der Brennkraftmaschine gesteuert werden, wobei durch das Steuergerät die Einspritzung des Kraftstoffs vor der Entzündung des Kraftstoffs beendet wird.

Ein derartiges System zur direkten Einspritzung von Kraftstoff in den Brennraum einer Brennkraftmaschine ist aus der GB-A-2 310 689 bekannt.

Eine Steuereinrichtung für eine Benzin-Brennkraftmaschine mit Direkteinspritzung ist aus der DE 196 12 150 A bekannt. Dort ist unter anderem offenbart, dass darauf zu achten ist, dass nicht zu einem Zeitpunkt das Einspritzventil geöffnet oder noch offengehalten wird, zu dem der Kompressionsdruck bereits den Einspritzdruck übersteigt. Dies würde sonst eine sogenannte Rückblasgefahr mit sich bringen.

Es wird als erste Betriebsart ein sogenannter Schichtbetrieb und als zweite Betriebsart ein sogenannter Homogenbetrieb unterschieden. Der Schichtbetrieb wird insbesondere bei kleineren Lasten verwendet, während der Homogenbetrieb bei größeren, an der Brennkraftmaschine anliegenden Lasten zur Anwendung kommt. Im Schichtbetrieb wird der Kraftstoff während der Verdichtungsphase der Brennkraftmaschine in den Brennraum, und zwar dort in die unmittelbare Umgebung einer Zündkerze eingespritzt. Dies hat zur Folge, dass keine gleichmäßige Verteilung des Kraftstoffs in dem Brennraum mehr erfolgen kann. Der Vorteil des Schichtbetriebs liegt darin, dass mit einer sehr geringen Kraftstoffmasse die anliegenden kleineren Lasten von der Brennkraftmaschine ausgeführt werden können. Größere Lasten können allerdings nicht durch den Schichtbetrieb erfüllt werden. Im für derartige größere Lasten vorgesehenen Homogenbetrieb wird der Kraftstoff während der Ansaugphase der Brennkraftmaschine eingespritzt, so dass eine Verwirbelung und damit eine Verteilung des Kraftstoffs in dem Brennraum noch ohne weiteres erfolgen kann. Insoweit entspricht der Homogenbetrieb etwa der Betriebsweise von Brennkraftmaschinen, bei denen in herkömmlicher Weise Kraftstoff in das Ansaugrohr eingespritzt wird.

In beiden Betriebsarten, also im Schichtbetrieb und im Homogenbetrieb, wird der Einspritzwinkel und die Einspritzdauer des einzuspritzenden Kraftstoffs von einem Steuergerät in Abhängigkeit von einer Mehrzahl von Parametern auf einen im Hinblick auf Kraftstoffeinsparung, Schadstoffreduzierung und dergleichen optimalen Wert gesteuert und/oder geregelt.

Zum Starten wird die Brennkraftmaschine im Homogenbetrieb betrieben. Es wird also der Kraftstoff während der Ansaugphase in den Brennraum eingespritzt. Der Einspritzwinkel und die Einspritzdauer, während der der Kraftstoff in den Brennraum einzuspritzen ist, wird dabei von dem Steuergerät vor der Ansaugphase berechnet. Diese Berechnung erfolgt in Echtzeit, also auf der Grundlage des vor der Ansaugphase herrschenden Betriebszustands der Brennkraftmaschine.

Während des Startens wird die Brennkraftmaschine sehr stark beschleunigt. Dies kann zur Folge haben, dass der vorab berechnete Einspritzwinkel und/oder die vorab berechnete Einspritzdauer im Zeitpunkt der tatsächlichen Einspritzung nicht mehr dem in diesem Zeitpunkt herrschenden Betriebszustand der Brennkraftmaschine entsprechen.

So ist es möglich, dass z.B. die Einspritzdauer für eine niedrige Drehzahl berechnet worden ist, dass sich dann aufgrund der Beschleunigung während des Startens die Drehzahl jedoch derart erhöht, dass nunmehr die Einspritzdauer zu lang ist. Dies kann zur Folge haben, dass noch Kraftstoff in den Brennraum eingespritzt wird und das Einspritzventil damit noch geöffnet ist, während der eingespritzte Kraftstoff von der Zündkerze bereits entzündet wird. Durch die Beendigung der Kraftstoffeinspritzung vor der Entzündung desselben wird gewährleistet, dass das Einspritzventil in jedem Fall geschlossen ist, wenn der Kraftstoff mittels der Zündkerze entzündet wird. Es wird damit sicher ein frühzeitiges Verkoken des Einspritzventils verhindert. Die Funktionsfähigkeit und die Lebensdauer des Einspritzventils wird dadurch wesentlich erhöht.

Des weiteren ist es möglich, dass aufgrund der Erhöhung der Drehzahl während des Startens auch noch dann das Einspritzventil geöffnet ist, wenn der von dem Kolben erzeugte Kompressionsdruck bereits größer ist als der Einspritzdruck, der auf den einzuspritzenden Kraftstoff ausgeübt wird. Dies hat dann zur Folge, dass ein Kraftstoff/Luft-Gemisch aus dem Brennraum in das Einspritzventil und damit in das Kraftstoffaufbereitungssystem zurückgeblasen wird. Dies bewirkt nachfolgende Aussetzer und dergleichen beim Betrieb der Brennkraftmaschine.

Aufgabe der Erfindung ist es, ein verfahren zum Betreiben einer Brennkraftmaschine zu schaffen, mit dem ein problemloseres Starten der Brennkraftmaschine möglich ist.

Diese Aufgabe wird bei einem Verfahren der eingangs genannten Art bzw. bei einer Brennkraftmaschine der eingangs genannten Art erfindungsgemäß dadurch gelöst, dass während des Startens der auf den einzuspritzenden Kraftstoff ausgeübte Druck gemessen wird, dass der in dem Brennraum vorhandene Druck ermittelt wird, dass der auf den Kraftstoff ausgeübte Druck und der in dem Brennraum vorhandene Druck verglichen werden, und dass die Einspritzung des Kraftstoffs beendet wird, bevor oder sobald der Druck in dem Brennraum größer wird als der auf den Kraftstoff ausgeübte Druck.

Spätestens in demjenigen Zeitpunkt, in dem der Druck in dem Brennraum größer wird als der der auf den Kraftstoff ausgeübte Druck, wird das Einspritzventil geschlossen. Auf diese Weise wird erreicht, dass kein Kraftstoff/Luft-Gemisch aus dem Brennraum in das Einspritzventil zurückgeblasen werden kann. Es wird damit die Funktionsfähigkeit des Kraftstoffaufbereitungssystems erhalten und ein Aussetzen oder dergleichen der Brennkraftmaschine vermieden. Es ist bei dieser Weiterbildung allerdings erforderlich, dass der auf den Kraftstoff ausgeübte Druck und der Druck in dem Brennraum in einem schnellen Zeitraster gemessen bzw. berechnet werden.

Bei einer vorteilhaften Ausgestaltung der Erfindung wird die Einspritzung des Kraftstoffs bei einer vorgegebenen Winkelstellung vor der Entzündung des Kraftstoffs beendet. Diese Winkelstellung ist dabei derart vorausberechnet und gewählt, dass sie in jedem Fall immer vor der Entzündung des Kraftstoffs liegt. Damit wird einerseits gewährleistet, dass das Einspritzventil in jedem Fall geschlossen ist, wenn der Kraftstoff entzündet wird. Andererseits hat diese Ausgestaltung den Vorteil, dass nur bei der genannten Winkelstellung von dem Steuergerät eine Maßnahme vorgenommen werden muß, nämlich das Einspritzventil in seinen geschlossenen Zustand zu überführen, falls es noch geöffnet ist. Weitere Maßnahmen, insbesondere eine Überwachung der Winkelstellung in einem Zeitraster, sind nicht erforderlich.

Besonders zweckmäßig ist es, wenn die Einspritzung des Kraftstoffs spätestens bei beispielsweise etwa 290 Grad nach dem oberen Totpunkt des zugehörigen Kolbens beendet wird. Der obere Totpunkt eines Kolbens in einem Zylinder wird zugehörigen Sensors gemessen. Es ist somit möglich, ausgehend von dem oberen Totpunkt nach der Ansaugphase diejenige Winkelstellung anzugeben, bei der das Einspritzventil geschlossen werden soll. Dabei stellt die Winkelstellung von etwa 290 Grad nach dem oberen Totpunkt nach der Ansaugphase einen Wert dar, bei dem in jedem Fall noch keine Entzündung des Kraftstoffs in dem Brennraum stattfindet.

Bei einer anderen vorteilhaften Ausgestaltung der Erfindung wird die Einspritzung des Kraftstoffs in einem vorgegebenen Zeit- oder Winkelabstand vor der Entzündung des Kraftstoffs beendet. Sobald z.B. der Abstand der tatsächlichen Winkelstellung der Brennkraftmaschine von der vorausberechneten, für die Entzündung vorgesehenen Winkelstellung einen bestimmten Grenzwert unterschreitet, wird, sofern noch Kraftstoff in den Brennraum eingespritzt wird, das Einspritzventil geschlossen. Damit wird erreicht, dass der Kraftstoff immer bis zu der maximal möglichen Winkelstellung eingespritzt wird, dass aber trotzdem in jedem Fall das Einspritzventil bei der Entzündung des Kraftstoffs geschlossen ist. Bei dieser Ausgestaltung ist es allerdings erforderlich, dass in einem schnellen Raster die aktuelle Winkelstellung der Brennkraftmaschine gemessen oder berechnet wird.

Bei einer weiteren vorteilhaften Weiterbildung der Erfindung wird die Einspritzung des Kraftstoffs bei einer vorgegebenen Winkelstellung beendet. Diese Winkelstellung ist dabei derart vorausberechnet und gewählt, dass das Einspritzventil in jedem Fall geschlossen ist, wenn der Druck im Brennraum größer wird als der auf den Kraftstoff ausgeübte Druck. Damit wird einerseits gewährleistet, dass das Einspritzventil sicher geschlossen wird, bevor ein Kraftstoff/Luft-Gemisch aus dem Brennraum in das Einspritzventil zurückgeblasen werden kann. Andererseits hat diese Ausgestaltung den Vorteil, dass nur bei der genannten Winkelstellung von dem Steuergerät eine Maßnahme vorgenommen werden muß, nämlich das Einspritzventil in seinen geschlossenen Zustand zu überführen, falls es noch geöffnet ist. Weitere Maßnahmen, insbesondere eine Überwachung der Winkelstellung in einem Zeitraster, sind nicht erforderlich.

Besonders zweckmäßig ist es, wenn die Einspritzung des Kraftstoffs etwa im unteren Totpunkt des zugehörigen Kolbens beendet wird. Bei dieser winkelstellung wird eine Fehlfunktion sicher vermieden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.
- Figur 1: zeigt ein schematisches Blockschaltbild eines Ausführungsbeispiels einer erfindungsgemäßen Brennkraftmaschine eines Kraftfahrzeugs,
- Figur 2: zeigt ein schematisches Blockschaltbild eines Ausführungsbeispiels eines erfindungsgemäßen Verfahrens zum Betreiben der Brennkraftmaschine der Figur 1, und
- Figuren 3a und 3b: zeigen jeweils ein schematisches Zeitdiagramm des Betriebs der Brennkraftmaschine der Figur 1.

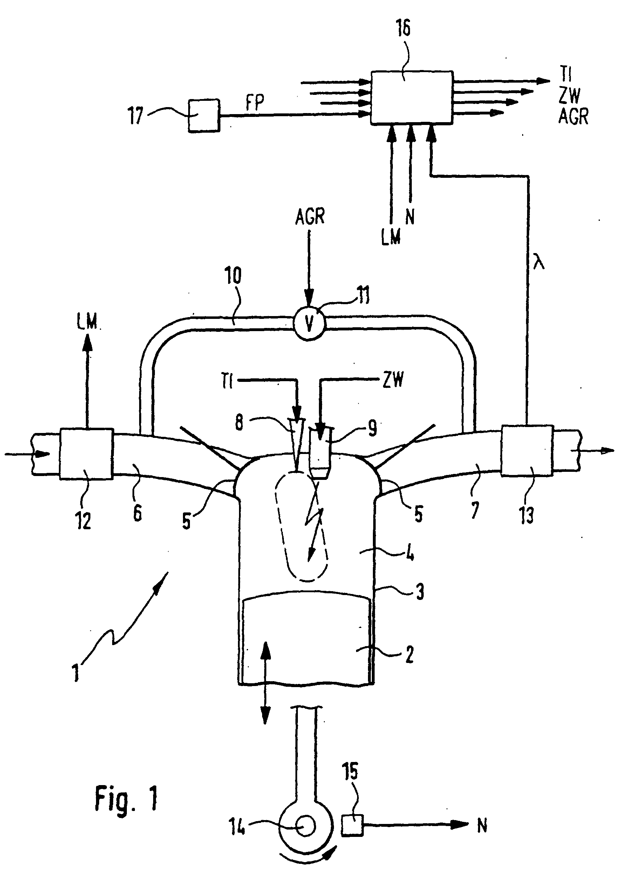

In der Figur 1 ist eine Brennkraftmaschine 1 dargestellt, bei der ein Kolben 2 in einem Zylinder 3 hin- und herbewegbar ist. Der Zylinder 3 ist mit einem Brennraum 4 versehen, an den über Ventile 5 ein Ansaugrohr 6 und ein Abgasrohr 7 angeschlossen sind. Des weiteren sind dem Brennraum 4 ein mit einem Signal TI ansteuerbares Einspritzventil 8 und eine mit einem Signal ZW ansteuerbare Zündkerze 9 zugeordnet. Das Abgasrohr 7 kann über eine Abgasrückführleitung 10 und ein mit einem Signal AGR steuerbares Abgasrückführventil 11 mit dem Ansaugrohr 6 verbunden sein.

Das Ansaugrohr 6 kann mit einem Luftmassensensor 12 und das Abgasrohr 7 kann mit einem Lambda-Sensor 13 versehen sein. Der Luftmassensensor 12 mißt die Sauerstoffmasse der dem Ansaugrohr 6 zugeführten Frischluft und erzeugt in Abhängigkeit davon ein Signal LM. Der Lambda-Sensor 13 mißt den Sauerstoffgehalt des Abgases in dem Abgasrohr 7 und erzeugt in Abhängigkeit davon ein Signal λ.

In einer ersten Betriebsart, dem Schichtbetrieb der Brennkraftmaschine 1, wird der Kraftstoff von dem Einspritzventil 8 während einer durch den Kolben 2 hervorgerufenen Verdichtungsphase in den Brennraum 4 eingespritzt, und zwar örtlich in die unmittelbare Umgebung der Zündkerze 9 sowie zeitlich unmittelbar vor dem oberen Totpunkt des Kolbens 2. Dann wird mit Hilfe der Zündkerze 9 der Kraftstoff entzündet, so daß der Kolben 2 in der nunmehr folgenden Arbeitsphase durch die Ausdehnung des entzündeten Kraftstoffs angetrieben wird.

In einer zweiten Betriebsart, dem Homogenbetrieb der Brennkraftmaschine 1, wird der Kraftstoff von dem Einspritzventil 8 während einer durch den Kolben 2 hervorgerufenen Ansaugphase in den Brennraum 4 eingespritzt. Durch die gleichzeitig angesaugte Luft wird der eingespritzte Kraftstoff verwirbelt und damit in dem Brennraum 4 im wesentlichen gleichmäßig verteilt. Danach wird das Kraftstoff-Luft-Gemisch während der Verdichtungsphase verdichtet, um dann von der Zündkerze 9 entzündet zu werden. Durch die Ausdehnung des entzündeten Kraftstoffs wird der Kolben 2 angetrieben.

Im Schichtbetrieb, wie auch im Homogenbetrieb wird durch den angetriebenen Kolben eine Kurbelwelle 14 in eine Drehbewegung versetzt, über die letztendlich die Räder des Kraftfahrzeugs angetrieben werden. Der Kurbelwelle 14 ist ein Drehzahlsensor 15 zugeordnet, der in Abhängigkeit von der Drehbewegung der Kurbelwelle 14 ein Signal N erzeugt.

Der Kraftstoff wird im Schichtbetrieb und im Homogenbetrieb unter einem hohen Druck über das Einspritzventil 8 in den Brennraum 4 eingespritzt. Zu diesem Zweck ist eine elektrische Kraftstoffpumpe und eine Hochdruckpumpe vorgesehen, wobei letztere von der Brennkraftmaschine 1 oder elektromotorisch angetrieben sein kann. Die elektrische Kraftstoffpumpe erzeugt einen sogenannten Raildruck EKP von mindestens 3 bar und die Hochdruckpumpe erzeugt einen Raildruck HD von etwa 100 bar.

Die im Schichtbetrieb und im Homogenbetrieb von dem Einspritzventil 8 in den Brennraum 4 eingespritzte Kraftstoffmasse wird von einem Steuergerät 16 insbesondere im Hinblick auf einen geringen Kraftstoffverbrauch und/oder eine geringe Schadstoffentwicklung gesteuert und/oder geregelt. Zu diesem Zweck ist das Steuergerät 16 mit einem Mikroprozessor versehen, der in einem Speichermedium, insbesondere in einem Read-Only-Memory ein Programm abgespeichert hat, das dazu geeignet ist, die genannte Steuerung und/oder Regelung durchzuführen.

Das Steuergerät 16 ist von Eingangssignalen beaufschlagt, die mittels Sensoren gemessene Betriebsgrößen der Brennkraftmaschine darstellen. Beispielsweise ist das Steuergerät 16 mit dem Luftmassensensor 12, dem Lambdasensor 13 und dem Drehzahlsensor 15 verbunden. Des weiteren ist das Steuergerät 16 mit einem Fahrpedalsensor 17 verbunden, der ein Signal FP erzeugt, das die Stellung eines von einem Fahrer betätigbaren Fahrpedals angibt. Das Steuergerät 16 erzeugt Ausgangssignale, mit denen über Aktoren das Verhalten der Brennkraftmaschine entsprechend der erwünschten Steuerung und/oder Regelung beeinflußt werden kann. Beispielsweise ist das Steuergerät 16 mit dem Einspritzventil 8, der Zündkerze 9 und dem Abgasrückführventil 11 verbunden und erzeugt die zu deren Ansteuerung erforderlichen Signale TI, ZW und AGR.

Mit dem Signal TI wird die Einspritzung des in den Brennraum einzuspritzenden Kraftstoffs gesteuert. Diese Einspritzung setzt sich aus einem Einspritzwinkel, bei dem die Einspritzung beginnt, und der Einspritzdauer, die die zeitliche Länge der Einspritzung festlegt, zusammen. Der Einspritzwinkel und die Einspritzdauer werden im Homogenbetrieb aufgrund der hierzu erforderlichen Rechenzeit jeweils vor der Ansaugphase von dem Steuergerät 16 berechnet. Das Steuergerät 16 legt dieser Berechnung den in diesem Zeitpunkt, also vor der Ansaugphase herrschenden Betriebszustand der Brennkraftmaschine zugrunde.

Beim Starten der Brennkraftmaschine 1 wird dieselbe im Homogenbetrieb betrieben. Der Einspritzwinkel und die Einspritzdauer werden vor der Ansaugphase von dem Steuergerät 16 berechnet. Während der Ansaugphase findet dann die Einspritzung des Kraftstoffs in den Brennraum 4 der Brennkraftmaschine 1 statt. Kurz vor dem oberen Totpunkt des Kolbens 2 zwischen der Verdichtungs- und der Arbeitsphase wird der Kraftstoff mittels der Zündkerze 9 entzündet.

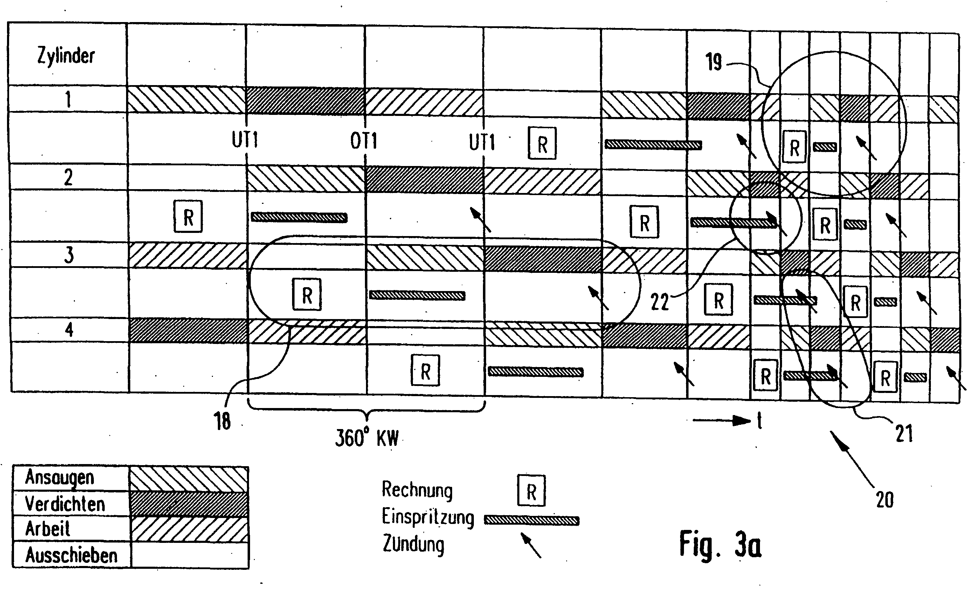

In der Figur 3a ist das Starten einer Brennkraftmaschine 1 nach dem Stand der Technik dargestellt. Es ist in der Figur 3a für die vier Zylinder 3 der Brennkraftmaschine 1 der jeweilige Betriebsablauf über der Zeit t aufgetragen. Die senkrechten Striche stellen dabei untere bzw. obere Totpunkte der Kolben 2 dar, wobei der unsere Totpunkt UT1 und der obere Totpunkt OT1 des ersten Zylinders beispielhaft gekennzeichnet sind. Zwischen jeweils zwei oberen oder unteren Totpunkten liegen 360 Grad Kurbelwellenwinkel KW.

Aus den unterschiedlichen Abständen der senkrechten Striche in Richtung der Zeitachse geht die Beschleunigung der Brennkraftmaschine, 1 während des Startens hervor. Während anfangs die Drehzahl N noch gering und damit die Zeitdauer für eine Winkeldrehung von beispielsweise 180 Grad KW noch lang ist, ist die Drehzahl N in einem späteren Zeitpunkt schon wesentlich größer und damit die Zeitdauer für dieselbe Winkeldrehung schon wesentlich kürzer.

Wie erwähnt, wird die Einspritzung.des Kraftstoffs in den Brennraum 4 vorab von dem Steuergerät 16 berechnet. Dabei wird der im Zeitpunkt der Berechnung aktuelle Betriebszustand der Brennkraftmaschine 1 zugrundegelgt. Dies bedeutet insbesondere, daß der Einspritzwinkel und die Einspritzdauer derart berechnet werden, daß die Einspritzung innerhalb der Ansaugphase erfolgen kann. Voraussetzung hierfür ist allerdings, däß sich die Drehzahl N der Brennkraftmaschine 1 nur innerhalb eines Bereichs ändert, der nur bei normalen oder üblichen Beschleunigungen der Brennkraftmaschine 1 auftreten kann.

Derartige Einspritzungen sind in der Figur 3a beispielhaft mit den Bezugsziffern 18, 19 gekennzeichnet.

Während des Startens wird die Brennkraftmaschine 1 sehr stark beschleunigt. Diese Beschleunigung hat Änderungen der Drehzahl N zur Folge, die die oben genannte Voraussetzung nicht mehr erfüllen. Dies hat zur Folge, daß der Einspritzwinkel und die Einspritzdauer, die, wie erwähnt, auf der Grundlage des bei der Berechnung vorliegenden aktuellen Betriebszustands der Brennkraftmaschine 1 und damit auf der Grundlage der in diesem Zeitpunkt vorhandenen Drehzahl N berechnet worden sind, nicht mehr zu der während der Einspritzung vorhandenen, wesentlich höheren Drehzahl N passen. Insbesondere ist die Einspritzdauer so lang, daß die Einspritzung über die Ansaugphase in die Verdichtungsphase hineinreicht. Die Brennkraftmaschine 1 hat sich praktisch "unter der Einspritzung hindurchgedreht". Dies ist bei den in der Figur 3a mit dem Bezugszeichen 20 gekennzeichneten Einspritzungen der Fall.

Dies kann zur Folge haben, daß das Einspritzventil 8 noch geöffnet ist, wenn der Kraftstoff in dem Brennraum 4 von der Zündkerze 9 bereits entzündet wird. Derartige Einspritzungen sind in der Figur 3a mit der Bezugsziffer 21 gekennzeichnet.

Ebenfalls kann dies zur Folge haben, daß das Kraftstoff/Luft-Gemisch aus dem Brennraum 4 in das Einspritzventil 8 zurückgeblasen wird. Eine derartige Einspritzung ist in der Figur 3a mit der Bezugsziffer 22 gekennzeichnet.

Letzteres kann sich daraus ergeben, daß das Kraftstoffaufbereitungssystem während des Startens noch nicht voll funktionsfähig ist. Bei dem Kraftstoffaufbereitungssystem handelt es sich insbesondere um die elektrische Kraftstoffpumpe und die Hochdruckpumpe. Da kurz nach dem Starten der Brennkraftmaschine 1 die Hochdruckpumpe noch keinen nennenswerten Druck erzeugt, übt höchstens die elektrische Kraftstoffpumpe den Raildruck EKP auf den Kraftstoff aus. Dieser beträgt maximal etwa 3,5 bar. Dies kann zur Folge haben, daß während der Verdichtungsphase der von dem Kolben 2 in dem Brennraum 4 erzeugte Kompressionsdruck größer wird als der von dem Kraftstoffaufbereitungssystem auf den einzuspritzenden Kraftstoff ausgeübte Druck. Tritt dieser Fall ein, so wird das Kraftstoff/Luft-Gemisch, wie erwähnt, aus dem Brennraum 4 in das Einspritzventil 8 zurückgeblasen.

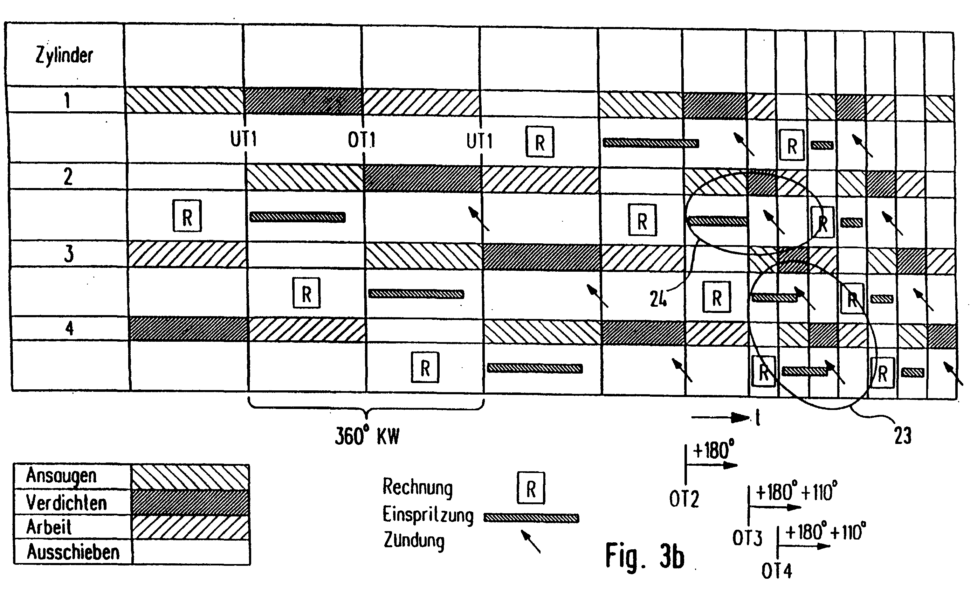

In der Figur 3b ist das Starten der Brennkraftmaschine 1 nach der Erfindung dargestellt. Die Figur 3b stimmt weitgehend mit der Figur 3a überein, weshalb auch gleiche Merkmale oder Funktionen mit gleichen Bezugszeichen gekennzeichnet sind.

Die Einspritzungen 21 der Figur 3a werden in der Figur 3b andersartig gesteuert und sind dort mit der Bezugsziffer 23 gekennzeichnet. Erfindungsgemäß werden diese Einspritzungen 23 der Figur 3b derart von dem Steuergerät 16 gesteuert, daß die Einspritzungen des Kraftstoffs in die Brennräume 4 jeweils vor der zugehörigen Entzündung des Kraftstoffs beendet sind. Auf diese Weise wird verhindert, daß das Einspritzventil 8 noch geöffnet ist, wenn der Kraftstoff entzündet wird.

Ebenfalls wird die Einspritzung 22 der Figur 3a in der Figur 3b andersartig gesteuert und ist dort mit der Bezugsziffer 24 gekennzeichnet. Erfindungsgemäß wird die Einspritzung 24 der Figur 3b derart von dem Steuergerät 16 gesteuert, daß die Einspritzung des Kraftstoffs in den Brennraum 4 beendet ist, wenn der Druck im Brennraum 4 größer wird als der auf den einzuspritzenden Kraftstoff ausgeübte Druck. Auf diese Weise wird verhindert, daß ein Kraftstoff/Luft-Gemisch aus dem Brennraum 4 in das Einspritzventil 8 zurückgeblasen wird.

Aus dem Signal für die Drehzahl N wird für jeden Zylinder 3 ein Interrupt-Signal in dem Steuergerät 16 erzeugt, wenn der zugehörige Kolben 2 den oberen Totpunkt OT durchläuft, und wenn der Kolben 2 die Winkelstellung von beispielsweise etwa 70 Grad vor dem oberen Totpunkt OT durchläuft. Die letztgenannte Winkelstellung stellt gleichzeitig eine Winkelstellung von etwa 290 Grad nach dem oberen Totpunkt OT dar.

Die Winkelstellung von etwa 70 Grad vor dem oberen Totpunkt OT ist derart gewählt, daß in der Verdichtungsphase vor dieser Winkelstellung in jedem Fall keine Zündung von Kraftstoff in dem zugehörigen Brennraum 4 stattfindet. Diese Winkelstellung bzw. das zugehörige Interrupt-Signal werden von dem Steuergerät 16 erfindungsgemäß dazu verwendet, die Einspritzung von Kraftstoff in einen sich in der Verdichtungsphase befindlichen Brennraum 4 zu beenden, also das entsprechende Einspritzventil 8 zu schließen.

Befindet sich einer der Kolben 2 der Brennkraftmaschine 1 im unteren Totpunkt UT zwischen der Ansaugphase und der Verdichtungsphase, so ist bei dieser Winkelstellung gewährleistet, daß der Druck im Brennraum 4 in keinem Fall größer ist als der auf den einzuspritzenden Kraftstoff ausgeübte Druck. Das Steuergerät 16 verwendet deshalb diese Winkelstellung dazu, um die Einspritzung von Kraftstoff zu beenden, wenn absehbar ist, daß bei der genannten Winkelstellung von etwa 70 Grad vor dem nächsten oberen Totpunkt OT der Druck im Brennraum 4 voraussichtlich größer sein wird als der auf den Kraftstoff ausgeübte Druck.

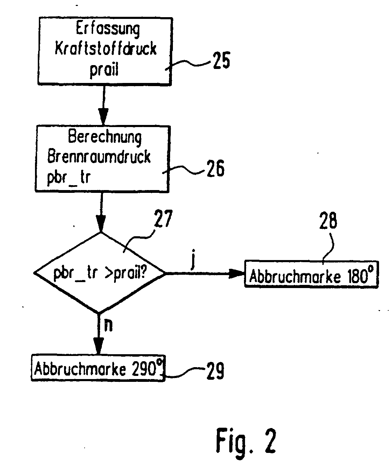

Zu diesem Zweck führt das Steuergerät 16 das in der Figur 2 dargestellt Verfahren durch.

Es wird mit Hilfe eines Drucksensors der auf den einzuspritzenden Kraftstoff ausgeübte Druck prail gemessen (Block 25). Dann wird berechnet, welcher Druck pbr_tr voraussichtlich bei der Winkelstellung von etwa 290 Grad nach dem oberen Totpunkt während der Verdichtungsphase in dem Brennraum 4 vorhanden ist (Block 26). Danach wird der auf den Kraftstoff ausgeübte Druck prail mit dem voraussichtlichen Druck pbr_tr im Brennraum 4 verglichen (Block 27).

Ist der voraussichtliche Druck pbr_tr größer als der Druck prail, so wird die Einspritzung von Kraftstoff im nächsten unteren Totpunkt UT des zugehörigen Kolbens 2 abgebrochen (Block 28), also bei einer Winkelstellung von 180 Grad nach dem oberen Totpunkt OT. Dies ist beispielhaft bei der Einspritzung 24 der Fall, bei der das Einspritzventil 8 nach 180 Grad nach OT2 geschlossen wird. Damit wird, wie erläutert, verhindert, daß das Kraftstoff/Luft-Gemisch aus dem Brennraum 4 in das Einspritzventil 8 zurückgeblasen wird.

Ist der voraussichtliche Druck pbr_tr kleiner als der Druck prail, so wird die Einspritzung von Kraftstoff etwa 70 Grad vor dem nächsten oberen Totpunkt OT abgebrochen (Block 29), also bei einer winkelstellung von etwa 290 Grad nach dem oberen Totpunkt OT. Dies ist beispielhaft bei den Einspritzungen 23 der Fall. Damit wird, wie ebenfalls erläutert, verhindert, daß das Einspritzventil 8 noch geöffnet ist, wenn der Kraftstoff gezündet wird.

## Patentansprüche

1. Verfahren zum Starten einer Brennkraftmaschine (1) insbesondere eines Kraftfahrzeugs, bei dem Kraftstoff entweder in einer ersten Betriebsart während einer Verdichtungsphase oder in einer zweiten Betriebsart während einer Ansaugphase direkt in einen von einem Kolben (2) begrenzten Brennraum (4) eingespritzt wird, bei dem der in den Brennraum (4) eingespritzte Kraftstoff entzündet wird, und bei dem die Einspritzung des Kraftstoffs vor der Entzündung des Kraftstoffs beendet wird, **dadurch gekennzeichnet, dass** während des Startens der auf den einzuspritzenden Kraftstoff ausgeübte Druck (prail) gemessen wird, dass der in dem Brennraum (4) vorhandene Druck (pbr_tr) ermittelt wird, dass der auf den Kraftstoff ausgeübte Druck (prail) und der in dem Brennraum (4) vorhandene Druck (pbr_tr) verglichen werden, und dass die Einspritzung des Kraftstoffs beendet wird, bevor oder sobald der Druck (pbr_tr) in dem Brennraum (4) größer wird als der auf den Kraftstoff ausgeübte Druck (prail).

2. Verfahren nach Anspruch 1, **dadurch gekennzeichnet, dass** die Einspritzung des Kraftstoffs bei einer vorgegebenen Winkelstellung vor der Entzündung des Kraftstoffs beendet wird.

3. Verfahren nach Anspruch 2, **dadurch gekennzeichnet, dass** die Einspritzung des Kraftstoffs spätestens bei beispielweise etwa 290 Grad nach dem oberen Totpunkt (OT) des zugehörigen Kolbens (2) beendet wird.

4. Verfahren nach Anspruch 1, **dadurch gekennzeichnet, dass** die Einspritzung des Kraftstoffs in einem vorgegebenen Zeit- oder Winkelabstand vor der Entzündung des Kraftstoffs beendet wird.

5. Verfahren nach Anspruch 1, **dadurch gekennzeichnet, dass** die Einspritzung des Kraftstoffs bei einem vorgegebenen Winkel beendet wird.

6. Verfahren nach Anspruch 5, **dadurch gekennzeichnet, dass** die Einspritzung des Kraftstoffs etwa im unteren Totpunkt (UT) des zugehörigen Kolbens (2) beendet wird.

7. Brennkraftmaschine (1) insbesondere für ein Kraftfahrzeug, mit einem Einspritzventil (8), mit dem Kraftstoff entweder in einer ersten Betriebsart während einer Verdichtungsphase oder in einer zweiten Betriebsart während einer Ansaugphase direkt in einen von einem Kolben (2) begrenzten Brennraum (4) eingespritzt wird, mit einer Zündkerze (9), mit der der in den Brennraum (4) eingespritzte Kraftstoff entzündet wird, und mit einem Steuergerät (16), mit dem das Einspritzventil (8) und die Zündkerze (9) zum Starten der Brennkraftmaschine (1) gesteuert werden, wobei durch das Steuergerät (16) die Einspritzung des Kraftstoffs vor der Entzündung des Kraftstoffs beendet wird, **dadurch gekennzeichnet, dass** ein Drucksensor zur Messung des während des Startens auf den einzuspritzenden Kraftstoff ausgeübten Drucks (prail), vorgesehen ist, dass durch das Steuergät (16) der in dem Brennraum (4) vorhandene Druck (pbr_tr) ermittelt wird, dass der auf den Kraftstoff ausgeübte Druck (prail) und der in dem Brennraum (4) vorhandene Druck (pbr_tr) verglichen werden, und dass durch das Steuergerät (16) die Einspritzung des Kraftstoffs beendet wird, bevor oder sobald der Druck (pbr_tr) in dem Brennraum (4) größer ist als der auf den Kraftstoff ausgeübte Druck (prail).

## Claims

1. Method for starting an internal combustion engine (1), in particular of a motor vehicle, in which fuel is injected, either during a compression phase in a first operating mode or during an intake phase in a second operating mode, directly into a combustion space (4) delimited by a piston (2), in which the fuel injected into the combustion space (4) is ignited, and in which the injection of the fuel is terminated before the ignition of the fuel, **characterized in that**, during starting, the pressure (prail) exerted on the fuel to be injected is measured, **in that** the pressure (pbr_tr) present in the combustion space (4) is determined, **in that** the pressure (prail) exerted on the fuel and the pressure (pbr_tr) present in the combustion space (4) are compared, and **in that** the injection of the fuel is terminated before or as soon as the pressure (pbr_tr) in the combustion space (4) becomes higher than the pressure (prail) exerted on the fuel.

2. Method according to Claim 1, **characterized in that** the injection of the fuel is terminated in a predetermined angular position before the ignition of the fuel.

3. Method according to Claim 2, **characterized in that** the injection of the fuel is terminated at the latest at, for example, about 290 degrees after the top dead centre (TDC) of the associated piston (2).

4. Method according to Claim 1, **characterized in that** the injection of the fuel is terminated at a predetermined time interval or angular distance before the ignition of the fuel.

5. Method according to Claim 1, **characterized in that** the injection of the fuel is terminated at a predetermined angle.

6. Method according to Claim 5, **characterized in that** the injection of the fuel is terminated approximately at the bottom dead centre (BDC) of the associated piston (2).

7. Internal combustion engine (1) in particular for a motor vehicle, with an injection valve (8), by means of which fuel is injected, either during a compression phase in a first operating mode or during an intake phase in a second operating mode, directly into a combustion space (4) delimited by a piston (2), with a spark plug (9), by means of which the fuel injected into the combustion space (4) is ignited, and with a control unit (16), by means of which the injection valve (8) and the spark plug (9) are controlled for the starting of the internal combustion engine (1), the injection of the fuel being terminated by means of the control unit (16) before the ignition of the fuel, **characterized in that** a pressure sensor for measuring the pressure (prail) exerted during starting on the fuel to be injected is provided, **in that** the pressure (pbr_tr) present in the combustion space (4) is determined by means of the control unit (16), **in that** the pressure (prail) exerted on the fuel and the pressure (pbr_tr) present in the combustion space (4) are compared, and **in that** the injection of the fuel is terminated by means of the control unit (16) before or as soon as the pressure (pbr_tr) in the combustion space (4) is higher than the pressure (prail) exerted on the fuel.

## Revendications

1. Procédé de démarrage d'un moteur à combustion interne (1) notamment d'un véhicule selon lequel le carburant est injecté soit selon un premier mode de fonctionnement pendant la phase de compression, soit, selon un second mode de fonctionnement, pendant la phase d'admission, directement dans une chambre de combustion (4) délimitée par un piston (2),
selon lequel on allume le carburant injecté dans la chambre de combustion (4) et selon lequel on termine l'injection du carburant avant d'allumer le carburant,
**caractérisé en ce que**
pendant le démarrage, on mesure la pression (prail) exercée sur le carburant à injecter,
on détermine la pression (pbr_tr) régnant dans la chambre de combustion (4),
on compare la pression (pail) exercée sur le carburant et la pression (pbr_tr) dans la chambre de combustion (4) et
on termine l'injection du carburant avant ou dès que la pression (pbr_tr) dans la chambre de combustion (4) devient supérieure à la pression (prail) exercée sur le carburant.

2. Procédé de démarrage d'un moteur à combustion interne (1) selon la revendication 1,
**caractérisé en ce qu'**
on termine l'injection du carburant dans une position angulaire prédéterminée avant l'allumage du carburant.

3. Procédé de démarrage d'un moteur à combustion interne (1) selon la revendication 2,
**caractérisé en ce qu'**
on termine l'injection du carburant plus tard par exemple à environ 290° après le point mort haut OT du piston correspondant (2).

4. Procédé de démarrage d'un moteur à combustion interne (1) selon la revendication 1,
**caractérisé en ce qu'**
on termine l'injection du carburant à une distance de temps ou une distance angulaire prédéterminée avant l'allumage du carburant.

5. Procédé de démarrage d'un moteur à combustion interne (1) selon la revendication 1,
**caractérisé en ce qu'**
on termine l'injection du carburant pour un angle prédéterminé.

6. Procédé de démarrage d'un moteur à combustion interne (1) selon la revendication 5,
**caractérisé en ce qu'**
on termine l'injection du carburant sensiblement au point mort bas UT du piston (2) correspondant.

7. Moteur à combustion interne (1) notamment pour un véhicule comprenant un injecteur (8) qui injecte du carburant soit selon un premier mode de fonctionnement pendant une phase de compression, soit selon un second mode de fonctionnement pendant une phase d'admission, directement dans une chambre de combustion (4) délimitée par un piston (2), comprenant une bougie d'allumage (9) pour allumer le carburant à injecter dans la chambre de combustion (4) et un appareil de commande (16) pour commander l'injecteur (8) et la bougie d'allumage (9) pour démarrer le moteur à combustion interne (1),
l'appareil de commande (16) terminant l'injection du carburant avant son allumage,
**caractérisé par**
un capteur de pression pour mesurer la pression (prail) exercée sur le carburant à injecter pendant le démarrage,
avec l'appareil de commande (16) on détermine la pression (pbr_tr) régnant dans la chambre de combustion (4),
on compare la pression (prail) exercée sur le carburant et la pression (pbr_tr) régnant dans la chambre de combustion (4) et
l'appareil de commande (16) termine l'injection du carburant avant ou dès que la pression (pbr_tr) dans la chambre de combustion (4) est supérieure à la pression (pro+1) exercée sur le carburant.
